# EUROPÄISCHE PATENTSCHRIFT

(11) **EP 1 456 562 B1**
(45) Veröffentlichungstag und Bekanntmachung des Hinweises auf die Patenterteilung: **21.06.2006**
(21) Anmeldenummer: 02791838.2
(22) Anmeldetag: 17.12.2002
(51) Int. Cl.: F16H 3/66

(54) **MEHRSTUFENGETRIEBE**
MULTIPLE GEAR TRANSMISSION
TRANSMISSION A PLUSIEURS ETAGES

(30) Priorität: 20.12.2001 DE 10162880
(43) Veröffentlichungstag der Anmeldung: 15.09.2004
(73) Patentinhaber: ZF FRIEDRICHSHAFEN AG, 88038 Friedrichshafen (DE)
(72) Erfinder: GUMPOLTSBERGER, Gerhard, 88045 Friedrichshafen (DE)
(86) Internationale Anmeldenummer: PCT/EP2002/014378
(87) Internationale Veröffentlichungsnummer: WO 2003/054422

(56) Entgegenhaltungen:
- DE-A- 1 505 723
- US-A- 4 428 254
- US-A- 6 053 839
- PATENT ABSTRACTS OF JAPAN vol. 014, no. 404 (M-1018), 31. August 1990 (1990-08-31) & JP 02 154840 A (TOYOTA MOTOR CORP), 14. Juni 1990 (1990-06-14)
- PATENT ABSTRACTS OF JAPAN vol. 016, no. 195 (M-1246), 12. Mai 1992 (1992-05-12) & JP 04 029650 A (NISSAN MOTOR CO LTD), 31. Januar 1992 (1992-01-31)

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, ,umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelementelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmen.

Des weiteren ist aus der DE 199 49 507 A1 der Anmelderin, das als nächstliegender Stand der Technik angesehen wird, ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Außerdem wird im Rahmen der EP 0 434 525 A1 ein Mehrstufengetriebe offenbart, welches eine Antriebswelle und eine Abtriebswelle, die in einem Gehäuse angeordnet sind, einen mit der Abtriebswelle konzentrischen Planetensatz aus vier von einem ersten bis zu einem vierten in Drehzahlordnung bezeichneten Elementen, d. h. einem sogenannten doppelten Planetensatz sowie fünf Schaltelemente, nämlich drei Kupplungen und zwei Bremsen enthält, deren selektives paarweises Eingreifen verschiedene Übersetzungsverhältnisse zwischen Antriebswelle und der Abtriebswelle bestimmt, wobei das Getriebe zwei Leistungswege aufweist, so dass durch das selektive paarweise Eingreifen der fünf Schaltelemente sechs Vorwärtsgänge erzielt werden.

Aus der DE 199 10 299 C1 ist ein Planetenräder-Wechselgetriebe mit drei Teilgetrieben bekannt, bei dem eine Eingangswelle durch wenigstens eines von drei Planetenräder-Teilgetrieben mit einer Ausgangswelle in Antriebsverbindung bringbar ist. Bei dem bekannten Planetenräder-Wechselgetriebe sind zunächst unter Verwendung von jeweils drei reibschlüssigen Kupplungen und Bremsen fünf Vorwärtsgänge einschließlich eines eine vorbestimmte Übersetzung aufweisenden direkten Ganges schaltbar.

Bei dem bekannten Planetenräder-Wechselgetriebe kann durch Auftrennung einer bestimmten Antriebsverbindung zwischen zwei der drei Teilgetriebe ein zusätzlicher sechster Vorwärtsgang vorgesehen sein. Bei einer anderen Ausführungsform wird dies durch zusätzliche Neben-Planeten und durch ein mit letzteren kämmendes zusätzliches äußeres Neben-Zentralrad erreicht, welches durch eine zusätzliche Bremse in dem sechsten Vorwärtsgang abbremsbar ist. Durch dieses Neben-Zentralrad werden bei der anderen Ausführungsform noch ein siebter Vorwärtsgang sowie ein zusätzlicher Rückwärtsgang ermöglicht.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird.

Diese Aufgabe wird erfindungsgemäß durch die Merkmale des Patentanspruches 1 gelöst. Vorteile und weitere vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind drei Einsteg-Planetensätze, sechs drehbare Wellen sowie sechs Schaltelemente, umfassend Bremsen und Kupplungen, vorgesehen, deren selektives paarweises Eingreifen verschiedene Übersetzungsverhältnisse zwischen der Antriebswelle und der Abtriebswelle bewirken, sodass vorzugsweise sieben Vorwärtsgänge und zwei Rückwärtsgänge realisierbar sind.

Gemäß der vorliegenden Erfindung ist bei dem Mehrstufenschaltgetriebe vorgesehen, dass der Antrieb durch eine Welle erfolgt, welche direkt mit dem Sonnenrad des ersten Planetensatzes verbunden ist und dass der Abtrieb über eine Welle erfolgt, welche mit dem Steg des zweiten Planetensatzes verbunden ist. Des weiteren ist bei dem erfindungsgemäßen Mehrstufengetriebe vorgesehen, dass eine weitere Welle ständig mit dem Sonnenrad des zweiten Planetensatzes und dem Sonnenrad des dritten Planetensatzes verbunden ist, dass eine Welle ständig den Steg des ersten Planetensatzes mit dem Hohlrad des dritten Planetensatzes verbindet, dass eine Welle ständig mit dem Hohlrad des ersten Planetensatzes verbunden ist und dass eine weitere Welle den Steg des dritten Planetensatzes mit dem Hohlrad des zweiten Planentensatzes verbindet, wobei die Planetensätze mit Wellen und Schaltelementen gekoppelt sind.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt wird.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise drei Kupplungen und drei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnung beispielhaft näher erläutert.

In diesen stellen dar:
- Fig. 1: eine schematische Ansicht eines ersten Ausführungsbeispiels eines erfindungsgemäßen Mehrstufengetriebes;
- Fig. 2: eine schematische Ansicht eines zweiten Ausführungsbeispiels des erfindungsgemäßen Mehrstufengetriebes und
- Fig. 3: ein Schaltschema für das erfindungsgemäße Mehrstufengetriebe gemäß den Fig. 1 und 2.

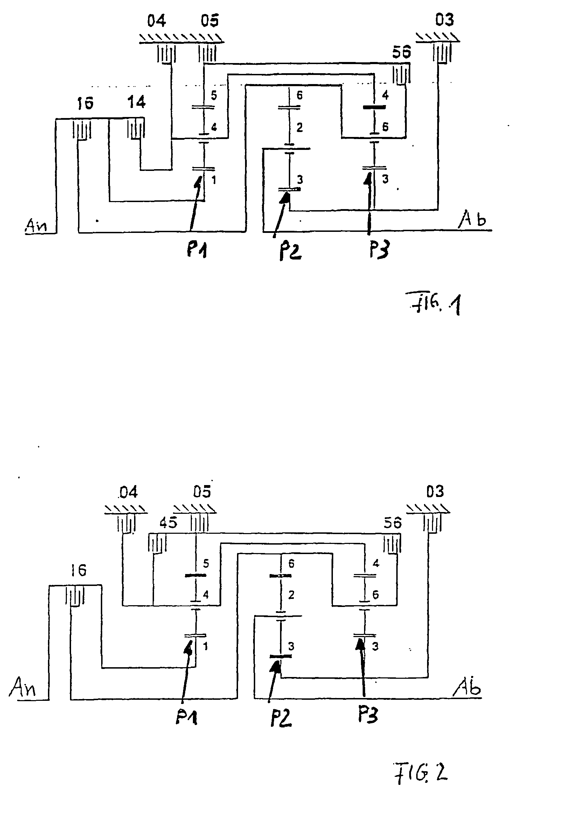

In Fig. 1 ist das erfindungsgemäße Mehrstufengetriebe mit einer Antriebswelle 1 (An) und einer Abtriebswelle 2 (Ab) dargestellt, welche in einem Gehäuse angeordnet sind. Es sind drei Planetensätze P1, P2, P3 vorgesehen, welche vorzugsweise Minus-Planetensätze sind.

Wie aus den Fig. 1 bis 3 ersichtlich ist, sind lediglich sechs Schaltelemente vorgesehen. Bei dem ersten Ausführungsbeispiel gemäß Fig. 1 sind drei Bremsen 03, 04 und 05 sowie drei Kupplungen 14, 16, und 56 vorgesehen. Bei dem zweiten Ausführungsbeispiel gemäß Fig. 2 sind die Bremsen 03, 04, und 05 sowie die Kupplungen 45, 16, und 56 vorgesehen.

Durch die in den Ausführungsbeispielen vorgesehenen Schaltelemente ist ein selektives Schalten von sieben Vorwärtsgängen und zwei Rückwärtsgängen realisierbar. Das erfindungsgemäße Mehrstufengetriebe weist insgesamt sechs drehbare Wellen auf, nämlich die Wellen 1, 2, 3, 4, 5 und 6.

Erfindungsgemäß ist bei den beiden dargestellten Ausführungsbeispielen des Mehrstufengetriebes vorgesehen, dass der Antrieb durch die Welle 1 erfolgt, welche direkt mit dem Sonnenrad des ersten Planetensatzes P1 verbunden ist und dass der Abtrieb über die Welle 2 erfolgt, welche mit dem Steg des zweiten Planetensatzes P2 verbunden ist. Des weiteren ist die Welle 3 ständig mit dem Sonnenrad des zweiten Planetensatzes P2 und dem Sonnenrad des dritten Planetensatzes P3 verbunden und die Welle 4 verbindet ständig den Steg des ersten Planetensatzes P1 mit dem Hohlrad des dritten Planetensatzes P3. Darüber hinaus ist die Welle 5 ständig mit dem Hohlrad des ersten Planetensatzes P1 verbunden. Die Welle 6 verbindet ständig den Steg des dritten Planetensatzes P3 mit dem Hohlrad des zweiten Planetensatzes P2.

Bei beiden Ausführungsbeispielen gemäß Fig. 1 und 2 ist die Welle 3 durch die Bremse 03, die Welle 4 durch die Bremse 04 und die Welle 5 durch die Bremse 05 an das Gehäuse ankoppelbar. Die Kupplung 16 verbindet die Welle 1 und die Welle 6 lösbar miteinander. Die Welle 5 und die Welle 6 sind über die Kupplung 56 lösbar miteinander verbunden.

Bei dem ersten Ausführungsbeispiel des erfindungsgemäßen Mehrstufengetriebes gemäß Fig. 1 werden zusätzlich durch die Kupplung 14 die Welle 1 und die Welle 4 lösbar miteinander verbunden. Im Unterschied dazu werden bei dem zweiten Ausführungsbeispiel gemäß Fig. 2 die Welle 4 und die Welle 5 über die Kupplung 45 lösbar miteinander verbunden.

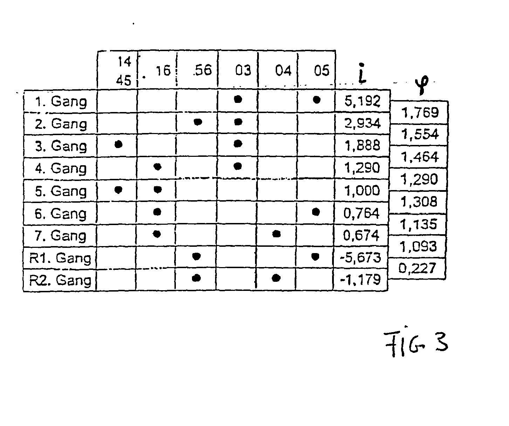

In Fig. 3 ist ein Schaltschema des erfindungsgemäßen Mehrstufengetriebes dargestellt, welches für beide Ausführungsbeispiele gilt. Ein Unterschied liegt darin, dass für das erste Ausführungsbeispiel in Fig. 1 die Kupplung 14 und für das zweite Ausführungsbeispiel gemäß Fig. 2 die Kupplung 45 jeweils neben den beiden anderen Kupplungen 16 und 56 vorgesehen ist.

Dem in Fig. 3 dargestellten Schaltschema des erfindungsgemäßen Mehrstufengetriebes können die jeweiligen Übersetzungen i der einzelnen Gangstufen und die daraus zu bestimmenden Stufensprünge ϕ beispielhaft entnommen werden. Des weiteren kann dem Schaltschema entnommen werden, dass bei sequentieller Schaltweise Doppelschaltungen vermieden werden, da zwei benachbarte Gangstufen jeweils ein Schaltelement gemeinsam benutzen. Darüber hinaus kann dem Schaltschema gemäß Fig. 3 entnommen werden, dass bei jeder beliebigen Schaltung zwischen dem ersten und dem vierten Gang sowie zwischen dem vierten und dem siebten Gang jeweils nur ein Schaltelement zusätzlich betätigt werden muss.

Bei Schaltvorgängen zwischen dem ersten und dem vierten Gang ist jeweils die Bremse 03 aktiviert, wobei im ersten Gang die Bremse 05, im zweiten Gang die Kupplung 56, im dritten Gang beim ersten Ausführungsbeispiel die Kupplung 14 oder beim zweiten Ausführungsbeispiel die Kupplung 45, und im vierten Gang die Kupplung 16 zusätzlich aktiviert wird.

Bei Schaltvorgängen zwischen dem vierten und dem siebten Gang ist die Kupplung 16 jeweils aktiviert und zusätzlich wird im fünften Gang beim ersten Ausführungsbeispiel die Kupplung 14 oder beim zweiten Ausführungsbeispiel die Kupplung 45, im sechsten Gang die Bremse 05 und im siebten Gang die Bremse 04 aktiviert. Im ersten Rückwärtsgang sind als Schaltelemente die Bremse 05 und die Kupplung 56 aktiviert, wobei im zweiten Rückwärtsgang die Bremse 04 und die Kupplung 56 aktiviert sind.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um eine Welle zu trennen und auch zu verbinden.

Zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite kann zudem ein Achsdifferential oder ein Verteilerdifferential angeordnet werden.

Im Rahmen einer vorteilhaften Weiterbildung kann die Antriebswelle durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle ständig mit der Kurbelwelle des Motors verbunden ist. Das Anfahren kann gemäß der Erfindung auch mittels eines Schaltelements des Getriebes erfolgen. Bevorzugt kann als Schaltelement die Bremse 03, die Bremse 04 oder die Bremse 05 verwendet werden.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle bevorzugt auf der Antriebswelle 1 oder der Abtriebswelle 2 eine verschleißfreie Bremse, wie z. B. ein hydraulischer, elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle bevorzugt auf der Antriebswelle 1 oder der Abtriebswelle 2 ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

### Bezugszeichen

- 1: Welle
- 2: Welle
- 3: Welle
- 4: Welle
- 5: Welle
- 6: Welle
- 03: Bremse
- 04: Bremse
- 05: Bremse
- 14: Kupplung
- 16: Kupplung
- 45: Kupplung
- 56: Kupplung

- P1: Planetensatz
- P2: Planetensatz
- P3: Planetensatz
- An: Antrieb
- Ab: Abtrieb
- i: Übersetzung
- ϕ: Stufensprung

## Patentansprüche

1. Mehrstufiengetriebe in Planetenbauweise, insbesondere ein Automatgetriebe für ein Kraftfahrzeug, umfassend eine Antriebswelle (1) und eine Abtriebswelle (2), welche in einem Gehäuse angeordnet sind, drei Einsteg-Planetensätze (P1, P2, P3), sechs drehbare Wellen (1, 2, 3, 4, 5, 6) sowie sechs Schaltelemente (03, 04, 05, 14, 16, 45, 56), umfassend Bremsen und Kupplungen, deren selektives paarweises Eingreifen verschiedene Übersetzungsverhältnisse zwischen der Antriebswelle (1) und der Abtriebswelle (2) bewirken, sodass sieben Vorwärtsgänge und zwei Rückwärtsgänge realisierbar sind, **dadurch gekennzeichnet, dass** der Antrieb durch die Antriebswelle (1) erfolgt, welche direkt mit dem Sonnenrad des ersten Planetensatzes (P1) verbunden ist, dass der Abtrieb über die Abtriebswelle (2) erfolgt, welche mit dem Steg des zweiten Planetensatzes (P2) verbunden ist, dass eine dritten Welle (3) ständig mit dem Sonnenrad des zweiten Planetensatzes (P2) und dem Sonnenrad des dritten Planetensatzes (P3) verbunden ist, dass eine vierten Welle (4) ständig den Steg des ersten Planetensatzes (P1) mit dem Hohlrad des dritten Planetensatzes (P3) verbindet, dass eine fünften Welle (5) ständig mit dem Hohlrad des ersten Planetensatzes (P1) verbunden ist und dass eine sechsten Welle (6) ständig den Steg des dritten Planetensatzes (P3) mit dem Hohlrad des zweiten Planetensatzes (P2) verbindet, wobei die dritten Welle (3) durch eine Bremse (03) an das Gehäuse ankoppelbar ist, die vierten Welle (4) durch eine Bremse (04) an das Gehäuse ankoppelbar ist, die fünften Welle (5) durch eine Bremse (05) an das Gehäuse ankoppelbar ist, eine Kupplung (16) die Antriebswelle (1) und die sechsten Welle, (6) lösbar miteinander verbindet, eine Kupplung (56) die fünften Welle (5) und die sechsten Welle (6) lösbar miteinander verbindet, und wobei entweder eine Kupplung (14) die Antriebswelle (1) und die vierten Welle (4) oder eine Kupplung (45) die vierten Welle (4) und die fünften Welle (5) miteinander lösbar verbindet.

2. Mehrstufengetriebe nach Anspruch 1, **dadurch gekennzeichnet, dass** die Planetensätze (P1, P2, P3) als Minus-Planetensätze ausgebildet sind.

3. Mehrstufengetriebe nach einem der vorstehenden Ansprüche, **dadurch gekennzeichnet , dass** an jeder geeigneten Stelle zusätzliche Freiläufe einsetzbar sind.

4. Mehrstufengetriebe nach Anspruch 3, **dadurch gekennzeichnet, dass** die Freiläufe zwischen einen Welle und dem Gehäuse vorgesehen sind.

5. Mehrstufengetriebe nach einem der vorstehenden Ansprüche, **dadurch gekennzeichnet , dass** Antrieb und Abtrieb auf der gleichen Seite des Gehäuses vorgesehen sind.

6. Mehrstufengetriebe nach einem der vorstehenden Ansprüche, **dadurch gekennzeichnet , dass** ein Achs- und/oder ein Verteilerdifferential auf der Antriebsseite oder der Abtriebsseite angeordnet ist.

7. Mehrstufengetriebe nach einem der vorstehenden Ansprüche, **dadurch gekennzeichnet , dass** die Antriebswelle (1) durch ein Kupplungselement von einem Antriebs-Motor trennbar ist.

8. Mehrstufengetriebe nach Anspruch 7, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

9. Mehrstufengetriebe nach einem der vorstehenden Ansprüche, **dadurch gekennzeichnet , dass** in Kraftflussrichtung hinter dem Getriebe ein externes Anfahrelement, insbesondere nach Anspruch 8, anordbar ist, wobei die Antriebswelle (1) fest mit der Kurbelwelle des Motors verbunden ist.

10. Mehrstufengetriebe nach einem der vorstehenden Ansprüche, **dadurch gekennzeichnet , dass** das Anfahren mittels eines Schaltelements des Getriebes erfolgt, wobei die Antriebswelle (1) ständig mit der Kurbelwelle des Motors verbunden ist.

11. Mehrstufengetriebe nach Anspruch 10, **dadurch gekennzeichnet, dass** als Schaltelement die Bremse (03), die Bremse (04) oder die Bremse (05) einsetzbar ist.

12. Mehrstufengetriebe nach einem der vorstehenden Ansprüche, **dadurch gekennzeichnet , dass** zwischen Motor und Getriebe ein Torsionsschwingungsdämpfer anordbar ist.

13. Mehrstufengetriebe nach einem der vorstehenden Ansprüche, **dadurch gekennzeichnet, dass** auf jeder Welle eine verschleißfreie Bremse anordbar ist.

14. Mehrstufengetriebe nach einem der vorstehenden Ansprüche, **dadurch gekennzeichnet , dass** zum Antrieb von zusätzlichen Aggregaten auf jeder Welle ein Nebenabtrieb anordbar ist.

15. Mehrstufengetriebe nach Anspruch 14, **dadurch gekennzeichnet , dass** der Nebenabtrieb auf der Antriebswelle (1) oder der Abtriebswelle (2) anordbar ist.

16. Mehrstufengetriebe nach einem der vorstehenden Ansprüche, **dadurch gekennzeichnet , dass** die Schaltelemente als lastschaltende Kupplungen oder Bremsen ausgebildet sind.

17. Mehrstufengetriebe nach Anspruch 16, **dadurch gekennzeichnet , dass** Lamellenkupplungen, Bandbremsen und/oder Konuskupplungen einsetzbar sind.

18. Mehrstufengetriebe nach einem der vorstehenden Ansprüche, **dadurch gekennzeichnet , dass** als Schaltelemente formschlüssige Bremsen und/oder Kupplungen vorgesehen sind.

19. Mehrstufengetriebe nach einem der vorstehenden Ansprüche, **dadurch gekennzeichnet , dass** auf jeder Welle als Generator und/oder als zusätzliche Antriebsmaschine eine elektrische Maschine anbringbar ist.

## Claims

1. The invention relates to a planetary-type multistep transmission, in particular an automatic transmission for a motor vehicle, including an input shaft (1) and an output shaft (2), which are arranged in a housing, three single-spider planetary sets (P1, P2, P3), six swivel shafts (1, 2, 3, 4, 5, 6) and six control elements (03, 04, 05, 14, 16, 45, 56), including brakes and clutches, the selective and paired engagement of which brings about various ratios between the input shaft (1) and the output shaft (2), so that seven forward gears and two reverse gears can be realized, **characterized in that** propulsion is produced by the input shaft (1), which is directly linked to the center gear of the first planetary set (P1), that the output is produced via the output shaft (2), which is linked to the spider of the second planetary set (P2), that a third shaft (3) is permanently linked to the center gear of the second planetary set (P2) and to the center gear of the third planetary set (P3), that a fourth shaft (4) permanently links the spider of the first planetary set (P1) with the internal gear of the third planetary set (P3), that a fifth shaft (5) is permanently linked to the internal gear of the first planetary set (P1), and that a sixth shaft (6) permanently links the spider of the third planetary set (P3) with the internal gear of the second planetary set (P2), with the third shaft (3) being linkable with the housing via a brake (03), the fourth shaft (4) being linkable with the housing via a brake (04), the fifth shaft (5) being linkable with the housing via a brake (05), with a clutch (16) establishing a separable link between the input shaft (1) and the sixth shaft (6), with a clutch (56) establishing a separable link between the fifth shaft (5) and the sixth shaft (6), and with a clutch (14) establishing a separable link between the input shaft (1) and the fourth shaft (4) or a clutch (45) establishing a separable link between the fourth shaft (4) and the fifth shaft (5).

2. A multistep transmission according to claim 1, **characterized in that** the planetary sets (P1, P2, P3) are negative planetary sets.

3. A multistep transmission according to one of the preceding claims, **characterized in that** additional overrunning clutches can be inserted in any suitable place.

4. A multistep transmission according to claim 3, **characterized in that** the overrunning clutches are arranged between a shaft and the housing.

5. A multistep transmission according to one of the preceding claims, **characterized in that** input and output are arranged on the same side of the housing.

6. A multistep transmission according to one of the preceding claims, **characterized in that** an axle and/or a center differential are/is arranged on the input side or on the output side.

7. A multistep transmission according to one of the preceding claims, **characterized in that** the input shaft (1) is separable from a driving engine by means of a coupling element

8. A multistep transmission according to claim 7, **characterized in that** the coupling element is either a hydrodynamic converter, a hydraulic clutch, a dry starting clutch, a wet starting clutch, a magnetic powder clutch, or a centrifugal clutch.

9. A multistep transmission according to one of the preceding claims, **characterized in that** an external starting component, especially one according to claim 8, can be arranged in power-flow direction after the transmission, with the input shaft (1) being firmly linked to the crankshaft of the engine.

10. A multistep transmission according to one of the preceding claims, **characterized in that** driveaway is performed by means of a control element of the transmission, with the input shaft (1) being permanently linked to the crankshaft of the engine.

11. A multistep transmission according to claim 10, **characterized in that** brake (03) or brake (04) or brake (05) can be used as control element.

12. A multistep transmission according to one of the preceding claims, **characterized in that** a torsional-vibration damper can be arranged between engine and transmission.

13. A multistep transmission according to one of the preceding claims, **characterized in that** a wear-free brake can be arranged on each shaft.

14. A multistep transmission according to one of the preceding claims, **characterized in that** an auxiliary drive can be arranged on each shaft to drive additional units.

15. A multistep transmission according to claim 14, **characterized in that** the auxiliary drive can be arranged either on the input shaft (1) or on the output shaft (2).

16. A multistep transmission according to one of the preceding claims, **characterized in that** the control elements are powershifting clutches or brakes.

17. A multistep transmission according to claim 16, **characterized in that** disk clutches, band brakes and/or cone clutches can be used.

18. A multistep transmission according to one of the preceding claims, **characterized in that** positive-engagement brakes and/or slip-free clutches are intended for use as control elements.

19. A multistep transmission according to one of the preceding claims, **characterized in that** an electric machine can be arranged on each shaft as a generator and/or as an additional driving motor.

## Revendications

1. Transmission multivitesses à trains épicycloïdaux, en particulier une transmission automatique pour véhicule automobiles, comportant un arbre d'entrée (1) et un arbre de sortie (2) disposés dans un carter, trois trains planétaires à un porte-satellites (P1, P2, P3), six arbres tournants (1, 2, 3, 4, 5, 6) ainsi que six organes de contrôle (03, 04, 05, 14, 16, 45, 56), comportant des freins et des embrayages, dont le serrage sélectif deux à deux détermine divers rapports de transmission entre l'arbre d'entrée (1) et l'arbre de sortie (2), de manière à ce que soient réalisables sept vitesses en marche avant et deux marches arrière, **caractérisée en ce que** l'entrée est réalisée par l'arbre d'entrée (1), celui-ci étant relié directement à un planétaire du premier train planétaire (P1), **en ce que** la sortie est réalisée par un arbre de sortie (2), celui-ci étant relié au porte-satellites du deuxième train planétaire (P2), **en ce que** un troisième arbre (3) est relié en permanence au planétaire du deuxième train planétaire (P2) et au planétaire du troisième train planétaire (P3), **en ce que** un quatrième arbre (4) relie en permanence le porte-satellites du premier train planétaire (P1) à la couronne du troisième train planétaire (P3), **en ce que** un cinquième arbre (5) est relié en permanence à la couronne du premier train planétaire (P1) et **en ce que** un sixième arbre (6) relie en permanence le porte-satellites du troisième train planétaire (P3) à la couronne du deuxième train planétaire (P2), sachant que le troisième arbre (3) peur être relié au carter par un frein (03), que le quatrième arbre (4) peut être relié au carter par un frein (04), que le cinquième arbre (5) peut être relié au carter par un frein (05), sachant qu'un embrayage (16) relie l'arbre d'entrée (1) de manière mobile au sixième arbre (6), qu'un embrayage (56) relie le cinquième arbre (5) de manière mobile au sixième arbre (6), et sachant que, ou un embrayage (14) relie l'arbre d'entrée (1) de manière mobile au quatrième arbre (4) ou un embrayage (45) relie le quatrième arbre (4) de manière mobile au cinquième arbre (5).

2. Transmission multivitesses selon la revendication 1**, caractérisée en ce que** les trains planétaires (P1, P2, P3) sont réalisés comme trains planétaires négatifs.

3. Transmission multivitesses selon une des revendications précédentes, **caractérisée en ce que** dans chaque emplacement possible peuvent être montées des roues libres.

4. Transmission multivitesses selon la revendication 3, **caractérisée en ce que** les roues libres sont prévues entre un arbre et le carter.

5. Transmission multivitesses selon une des revendications précédentes, **caractérisée en ce que** l'entrée et la sortie sont prévues du même côté du carter.

6. Transmission multivitesses selon une des revendications précédentes, caractérisée en que un différentiel de pont et/ou un différentiel de transfert sont disposés du côté entrée ou du côté sortie.

7. Transmission multivitesses selon une des revendications précédentes, caractérisée en que l'arbre d'entrée (1) peut être séparé d'un moteur d'entraînement au moyen d'un organe d'accouplement.

8. Transmission multivitesses selon une des revendications précédentes, caractérisée en que en tant qu'organe d'accouplement est prévu un convertisseur de couple hydrodynamique, un coupleur hydraulique, un embrayage de démarrage à sec, un embrayage de démarrage en bain d'huile, un embrayage à poudre magnétique ou un embrayage centrifuge.

9. Transmission multivitesses selon une des revendications précédentes, **caractérisée** en que dans le sens de la chaîne cinématique et en aval de la boîte de vitesses peut être disposé, en particulier selon la revendication 8, un organe de démarrage externe, sachant que l'arbre d'entrée (1) est monté de manière solidaire sur le vilebrequin du moteur.

10. Transmission multivitesses selon une des revendications précédentes, **caractérisée** en que le démarrage s'effectue au moyen d'un organe de contrôle de la boîte de vitesses, sachant que l'arbre d'entrée (1) est relié en permanence au vilebrequin du moteur.

11. Transmission multivitesses selon la revendication 10, caractérisée en que en tant qu'organe de contrôle peut être utilisé le frein (03), le frein (04) ou le frein (05).

12. Transmission multivitesses selon une des revendications précédentes, **caractérisée** en que entre le moteur et la boîte de vitesses peut être disposé un amortisseur de vibrations torsionnelles.

13. Transmission multivitesses selon une des revendications précédentes, **caractérisée** en que sur chaque arbre peut être disposé un frein sans usure.

14. Transmission multivitesses selon une des revendications précédentes, caractérisée en que sur chaque arbre peut être disposé une prise de mouvement pour l'entraînement d'organes supplémentaires.

15. Transmission multivitesses selon la revendication 14, caractérisée en que la prise de mouvement peut être disposé sur l'arbre d'entrée (1) ou sur l'arbre de sortie (2).

16. Transmission multivitesses selon une des revendications précédentes, **caractérisée en que** les organes de commande sont réalisés en tant qu'embrayages ou freins couplables sous charge.

17. Transmission muttivitesses selon la revendication 16, caractérisée en que peuvent être utilisés des embrayages à disques, des freins à ruban et/ou des embrayages à cône.

18. Transmission multivitesses selon une des revendications précédentes, **caractérisée en ce que** en tant qu'organes de commande sont prévus des freins et/ou des embrayages à commande mécanique.

19. Transmission multivitesses selon une des revendications précédentes, **caractérisée en ce que**, en tant que générateur et/ou machine motrice supplémentaires sur chaque arbre peut être monté une machine électrique.
